# EUROPÄISCHE PATENTANMELDUNG

(11) **EP 0 932 018 A2**
(43) Veröffentlichungstag der Anmeldung: **28.07.1999**
(21) Anmeldenummer: 99100063.9
(22) Anmeldetag: 05.01.1999
(51) Int. Cl.: G01B 7/30, G01D 5/20

(54) **Induktive Winkelmessvorrichtung**

(30) Priorität: 08.01.1998 DE 19800380
(71) Anmelder: Schleicher, Wolfgang Dipl.-Ing., 78050 Villingen-Schwenningen (DE)
(72) Erfinder: Schleicher, Wolfgang Dipl.-Ing., 78050 Villingen-Schwenningen (DE)
(74) Vertreter: Neymeyer, Franz, Dipl.-Ing. (FH)

(57) **Zusammenfassung**

Induktive Winkelmeßvorrichtungen sind in der Regel mit einer elektromagnetischen Meßspule (2) ausgestattet, in welche durch ein magnetisches Wechselfeld eine Meßspannung induziert wird. Durch einen relativ zur Meßspule (2) drehend bewegbaren Meßkörper (4) wird die Induktivität und die Meßspannung der Meßspule (4) in Abhängigkeit der Lage des Meßkörpers (4) zur Meßspule (2) beeinflußt. Zum Erreichen einer optimalen induktiven Kopplung zwischen dem magnetischen Wechselfeld und der Meßspule (2) ist die Meßspule (2) aus zwei Spulenringen gebildet, welche gegensinnig gewickelt und koaxial zueinander angeordneten sind. Die Spulenringe sind in zwei sich diametral gegenüberliegende Spulenabschnitte unterteilt, wobei sich die Wicklungen der beiden Spulenringe derart überkreuzen, daß der erste Spulenabschnitt des ersten Spulenringes in Richtung der Spulenachse (9) vor dem ersten Spulenabschnitt des zweiten Spulenringes und der zweite Spulenabschnitt des ersten Spulenringes hinter dem zweiten Spulenabschnitt des zweiten Spulenringes angeordnet ist.

## Beschreibung

Die Erfindung betrifft eine Induktive Winkelmeßvorrichtung mit wenigstens einer elektromagnetischen Meßspule, in welche durch wenigstens ein magnetisches Wechselfeld eine Meßspannung induziert wird, und mit einem drehend antreibbaren, die Induktivität und die Meßspannung der Meßspule in Abhängigkeit seiner Winkelstellung gegenüber der Meßspule beeinflussenden Meßkörper mit wenigstens einem sich über einen Zentriwinkel von etwa 180^{o} erstreckenden Zylinderabschnitt, wobei die Meßspule aus einem ersten und einem zweiten Spulenring gebildet ist, welche koaxial zueinander angeordnet sind und jeweils in einen ersten und zweiten Spulenabschnitt unterteilt sind, die sich jeweils diametral gegenüberliegen, und wobei sich die Wicklungen der beiden Spulenringe derart überkreuzen, daß der erste Spulenabschnitt des ersten Spulenrings in einer Achsrichtung der Spulenachse axial versetzt vor dem ersten Spulenabschnitt des zweiten Spulenrings und der zweite Spulenabschnitt des ersten Spulenrings in der gleichen Achsrichtung axial versetzt hinter dem zweiten Spulenabschnitt des zweiten Spulenrings angeordnet ist.

Es sind Winkelmeßvorrichtungen bekannt, welche wenigstens eine elektromagnetische Meßspule aufweisen, in welcher durch ein magnetisches Wechselfeld eine Meßspannung induziert wird. Solche induktive Winkelmeßvorrichtungen ermöglichen die einfache elektrische Erfassung und Messung mechanischer Größen, indem diese mechanischen Größen in ein analoges Spannungssignal umwandelbar sind. Zur Winkelmessung wird dabei ein im induktiven Wirkungsbereich der Meßspule angeordneter Meßkörper rotierend angetrieben, so daß in Abhängigkeit von der Winkelstellung des Meßkörpers gegenüber der Meßspule deren Induktivität und damit deren Meßspannung beeinflußt wird. Als Meßkörper dienen dabei im wesentlichen Meßzylinder, deren Umfangsfläche mit einem etwa halbzylindrisch ausgebildeten, aus einem speziellen, die Induktivität beeinflussenden Material bestehenden Werkstoff gebildeten Körperabschnitt versehen ist. Die bekannten Winkelmeßvorrichtungen können dabei aus zwei Spulen oder Spulenabschnitten gebildet sein, die in einer induktiven Halbbrücke zusammengeschaltet sind oder sie arbeiten auf dem Prinzip eines Differentialtransformators.

Eine solche induktive Halbbrücke besteht aus zwei in Serie geschalteten Spulen, welche mit einer Wechselspannung von beispielsweise 10 kHz gespeist werden. Durch diese Wechselspannung wird in den Spulen ein entsprechender Wechselstrom I hervorgerufen, durch welchen ein magnetischer Wechselfluß erzeugt wird. Dieser Wechselfluß induziert nach dem Induktionsgesetz eine Selbstinduktionsspannung, welche in beiden Spulen bei gleicher Ausbildung der Spulen die gleiche Größe aufweist. Sind nun diese beiden Spulen im Umfangsbereich eines rotatorisch angetriebenen Meßkörpers angeordnet und werden die Induktivitäten der beiden Spulen bei der drehenden Bewegung des Meßkörpers nacheinander unterschiedlich beeinflußt, so entsteht eine vom Drehwinkel des Meßkörpers abhängige und zu diesem Winkel proportionale Spannungsänderung, welche im Verbindungsbereich zwischen den beiden Spulen abnehmbar ist. Diese Spannungsänderung kann von einem Demodulator in ein entsprechendes Gleichspannungssignal umgewandelt werden, welches dann entsprechend proportional zur Winkeländerung bzw. dem Drehwinkel des Meßkörpers ist. Auf diese Art läßt sich in einfacher Weise der Drehwinkel eines Meßkörpers über ein Spannungssignal ermitteln. Die Ausgangssignale sind dabei stufenlos und haben einen stetigen Verlauf. Induktive Winkelmeßvorrichtungen, welche nach dem Prinzip der induktiven Halbbrücke ausgelegt sind, dienen zum Messen von Winkeln mit einem linearen Meßbereich von +/- 45°. Dies bedeutet, daß derartige nach einer induktiven Halbbrücke ausgelegten Winkelmeßvorrichtungen für eine Drehwinkelmessung über einen Winkelbereich von 360° nicht oder nur bedingt geeignet sind.

Solche Winkelmessungen über eine Winkelbereich von 360° und mehr können allerdings von induktiven Winkelmeßvorrichtungen, welche nach dem Differentialtransformatorprinzip arbeiten gemessen werden. Dazu sind beispielsweise Winkelmeßvorrichtungen, welche als sogenannte "Resolver" bezeichnet werden, bekannt geworden (Prospekt Firma Baumer electric, TTW 4/96 Nr. 800164). In dieser Firmenschrift wird ein als rein passives Winkelmeßsystem ausgelegter Miniatur-Resolver beschrieben, welcher eigentlich ein Transformator mit winkelabhängiger, elektromagnetischer Kopplung ist. Dieser Resolver besitzt einen rein passiven Rotor ohne Spulen. Eine feststehende Primärspule wird von einer Wechselspannung gespeist. In ihrem Inneren erzeugt sie somit ein homogenes, magnetisches Wechselfeld. Als Aufnehmer befinden sich innerhalb dieser Sendespule stationäre Empfängerspulen oder auch Meßspulen, die von diesem homogenen, magnetischen Wechselfeld durchsetzt werden. Folglich wird in diesen im Inneren der Sendespule angeordneten Meßspulen eine zu messende Spannung induziert, welche von der induktiven Kopplung zwischen der Sendespule und den Meßspulen abhängig ist. Ohne weitere Beeinflussung dieses Systems werden in den Meßspulen Spannungen gleicher Größe und je nach Wickelrichtung der einzelnen Spulen mit unterschiedlichem oder gleichem Vorzeichen erzeugt.
In der Sendespule ist desweiteren ein Rotor angeordnet, welcher ein ferromagnetisches Teil aufweist, das umlaufend mit dem Rotor rotiert und die in Umfangsrichtung gleichmäßig hintereinander angeordneten Meßspulen nacheinander beeinflußt. Dieser ferromagnetische Teil des Rotors verändert dabei das elektromagnetische Wechselfeld im Inneren der Sendespule so, daß in den Meßspulen in Abhängigkeit vom Drehwinkel des Rotors unterschiedliche Spannungen induziert werden. Es sind dabei vier Meßspulen vorgesehen, welche einander paarweise, sich diametral gegenüberliegend zugeordnet sind. Diese paarweisen Meßspulen sind gegensinnig gewickelt und verlaufen mit ihrer Spulenachse parallel zur Spulenachse der Sendespule, welche ihrerseits wiederum parallel und konzentrisch zur Drehachse des Rotors angeordnet ist. Jedes Meßspulenpaar erzeugt dabei eine drehwinkelabhängige Meßspannung, so daß durch diese Meßspannung eines jeden Spulenpaares ein Drehwinkel von insgesamt 360° erfaßbar ist. Da die Meßspulen in Umfangsrichtung paarweise um 90^{o} versetz zueinander angeordnet sind, können aus den beiden um 90° phasenverschobene Meßspannungen sowohl Rotorwinkel als auch Drehrichtung des Rotors bestimmt werden.

Dieser bekannte Resolver zeichnet sich durch eine eingeschränkte induktive Kopplung zwischen der Sendespule und den Meßspulen aus, da die Sendespule außerhalb der eigentlichen Meßspulen angeordnet ist und somit die elektromagnetische Kopplung nicht optimal ist. Desweiteren ist auch aufgrund der vorgesehenen einzelnen Meßspulen, welche sich paarweise diametral gegenüberliegen ein komplizierter mechanischer Aufbau notwendig. Auch können solche Resolver nach dem beschriebenen Aufbau nicht in beliebiger Größe hergestellt werden, da sich mit zunehmender Baugröße des Resolvers die induktive Kopplung zwischen der Sendespule und den Meßspulen verschlechtert und somit die Meßgenauigkeit einer solchen induktiven Winkelmeßvorrichtung mit zunehmender Baugröße ungenauer wird. Außerdem wird ein solcher Resolver mit zunehmender Baugröße empfindlicher gegen äußere Störeinflüsse.

Weiterhin ist eine Winkelmeßvorrichtung bekannt (DE 42 43 022 A1), die einen Rotor aufweist, der zwei etwa halbkreisförmige Zylinderabschnitte aufweist. Diese Zylinderabschnitte sind in axialer Richtung der Drehachse des Rotors axial hintereinander liegend angeordnet und in Umfangsrichtung um 180° gegeneinander versetzt. Dem Rotor ist eine Meßspule zugeordnet, die aus zwei Spulenringen gebildet wird und ortsfest, koaxial zum Rotor angeordnet ist. Die beiden Spulenringe sind in jeweils zwei sich etwa über einen Zentriwinkel von 180° erstreckende Spulenabschnitte unterteilt, wobei der jeweilige erste Spulenabschnitt eines Spulenrings axial im Bereich des vorderen Zylinderabschnittes und der jeweilige zweite Spulenabschnitt eines Spulenrings axial im Bereich des hinteren Zylinderabschnittes des Rotors angeordnet ist. Die so stufenförmig gewickelten Spulenringe überkreuzen sich und stehen mit ihren Spulenabschnitten jeweils mit beiden Zylinderabschnitten des Rotors während einer vollen Umdrehung des Rotors in Wirkverbindung. Mit dieser Spulenanordnung sollen Verschiebungen des Rotors in allen Richtung relativ zur Meßspule kompensiert werden. Da bei dieser bekannten Winkelmeßvorrichtung keine Sendespule vorgesehen ist, sondern die Meßspulen selbst mit der Trägerfrequenz zum Aufbau eines Magnetfeldes beaufschlagt wird, können solche Winkelmeßvorrichtungen auch größer ausgebildet werden. Um nun Schwankungen des Rotors jeglicher Art kompensieren zu können, sind die Zylinderabschnitte des Rotors in ihrer Breite in Richtung der Drehachse des Rotors größer ausgebildet, als die Breite eines einzelnen Spulenrings. Dies hat bei größeren Baugrößen der Winkelmeßvorrichtung eine erhöhte Baulänge zu Folge. Außerdem wird der lineare Meßbereich, der bis zu +/- 120° betragen soll weiter eingeschränkt, da auch die Kreuzungspunkte der Spulenringe dieser erhöhten Breite angepaßt werden müssen. Desweiteren ist der Aufbau des Rotors mit seinen zwei Zylinderabschnitten kompliziert, da der Rotor, um während einer vollen Umdrehung mit seinen Zylinderabschnitten wechselweise mit den Spulenabschnitten in Wirkverbindung treten zu können, sowohl in Umfangsrichtung als auch in axialer Richtung seiner Drehachse abgestuft ausgebildet sein muß. Eine Winkelmessung um volle 360° ist auch bei dieser Winkelmeßvorrichtung aufgrund des eingeschränkten linearen Meßbereiches nicht oder nur bedingt möglich. Da diese Winkelmeßvorrichtung allerdings zur Bestimmung einer Drosselklappenstellung bei Kraftfahrzeugen vorgesehen sein soll, ist dies auch nicht notwendig, da eine Drosselklappe auch keine Drehung um 360° ausführt.

Demgemäß liegt der Erfindung die Aufgabe zugrunde, eine induktive Winkelmeßvorrichtung zur Verfügung zu stellen, bei welcher zum Erreichen eines möglichst großen linearen Meßbereichs eine optimale induktive Kopplung zwischen dem magnetischen Wechselfeld und der oder den verwendeten Meßspulen im wesentlichen unabhängig von der Baugröße der Winkelmeßvorrichtung erreicht wird, wobei gleichzeitig ein möglichst einfacher und kostengünstiger Aufbau gewährleistet sein soll.

Die Aufgabe wird in Zusammenwirken mit den Merkmalen des Oberbegriffes des Anspruches 1 erfindungsgemäß dadurch gelöst, daß die Spulenringe der Meßspule gegensinnig gewickelt sind, und daß eine koaxial zur Meßspule angeordnete Sendespule vorgesehen ist, die aus zwei entgegengesetzt gewickelten Spulenringen besteht, welche derart axial hintereinander liegend angeordnet sind, daß der erste Spulenring axial im Bereich der vorderen Spulenabschnitte und der zweite Spulenring axial im Bereich der hinteren Spulenabschnitte angeordnet ist.

Durch die erfindungsgemäße Ausgestaltung wird eine berührungslose, induktive Winkelmeßvorrichtung zur Verfügung gestellt, mit der die Winkelposition eines Meßkörpers durch Erzeugen eines Analogsignals über einen Drehwinkel von 360° ermittelbar ist. Die erfindungsgemäße Winkelmeßvorrichtung zeichnet sich dabei durch einen einfachen mechanischen und einen einfachen Aufbau der elektronischen Auswerteeinrichtung aus. Desweiteren wird unabhängig von der Baugröße der Winkelmeßvorrichtung eine optimale induktive Kopplung zwischen der Sendespule und der Meßspule erreicht, da diese sich umlaufend in unmittelbarer räumlicher Nähe befinden.

Dazu weist die Meßspule einen ersten und einen zweiten Spulenring auf, welche gegensinnig gewickelt sind und koaxial zueinander angeordnet sind. Jeder der Spulenringe ist jeweils in einen ersten und einen zweiten Spulenabschnitt unterteilt, welche sich jeweils bezüglich der Spulenachse diametral gegenüberliegen. Diese Wicklungen der beiden Spulenringe überkreuzen sich, so daß der erste Spulenabschnitt des ersten Spulenrings in einer Achsrichtung der Spulenachse der Meßspule axial versetzt vor dem ersten Spulenabschnitt des zweiten Spulenrings liegt. Dementsprechend liegt der zweite Spulenabschnitt des ersten Spulenrings in gleicher Achsrichtung axial versetzt hinter dem zweiten Spulenabschnitt des zweiten Spulenrings. Dies bedeutet, daß sich die beiden Spulenringe bzw. deren Wicklungen diametral gegenüberliegend überkreuzen.

Der vorgesehene Meßkörper ist konzentrisch zur Spulenachse der Meßspule angeordnet und weist auf seiner Mantelfläche einen Zylinderabschnitt auf, welcher sich über einen Zentriwinkel von etwa 180° erstreckt. Dieser Zylinderabschnitt erstreckt sich in Achsrichtung der Spulenachse wenigstens über die Breite einer der Spulenabschnitte, so daß bei dessen Rotation in Abhängigkeit des Drehwinkels des Meßkörpers abwechselnd die beispielsweise im axial vorderen Bereich liegenden Spulenabschnitte der beiden Spulenringe beeinflußt werden, sofern der Zylinderabschnitt des Meßkörpers in diesem axialen Bereich angeordnet ist. Desgleichen gilt für die axial hinteren Spulenabschnitte der beiden Spulenringe, wenn der Zylinderabschnitt entsprechen in deren Axialbereich angeordnet ist. Somit wird durch den Zylinderabschnitt in Abhängigkeit vom Drehwinkel des Meßkörpers relativ zur Meßspule deren Induktivität verändert. Durch diese wechselseitige Beeinflussung der Spulenabschnitte, von denen der eine dem ersten Spulenring und der andere dem zweiten Spulenring zugeordnet ist, wird zwischen den Anschlußleitungen der in Reihe geschalteten, gegensinnig gewickelten Spulenringe eine Meßspannung erzeugt.

Das magnetische Wechselfeld wird durch eine Sendespule erzeugt, welche mit einer entsprechenden Wechselspannung und damit einem entsprechenden Wechselstrom beaufschlagt wird. Durch diesen Wechselstrom wird das benötigte magnetische Wechselfeld erzeugt, durch welches in die Meßspule eine entsprechende Spannung induziert wird. Die Sendespule ist dabei koaxial zur Meßspule angeordnet und besteht aus zwei entgegengesetzt gewickelten Spulenringen, welche axial in Richtung der Spulenachse hintereinander liegend angeordnet sind. Dabei befindet sich der erste Spulenring der Sendespule axial im Bereich der vorderen Spulenabschnitte der Spulenringe der Meßspule und der zweite Spulenring der Sendespule axial im Bereich der hinteren Spulenabschnitte. Dadurch werden in die einzelnen Spulenabschnitte des jeweiligen Spulenrings der Meßspule entgegengesetzte Meßspannungen induziert. Durch den Zylinderabschnitt des Meßkörpers wird die Induktivität der im Wirkungsbereich des Meßkörpers liegenden Spulenabschnitte in Abhängigkeit vom Rotationswinkel des Meßkörpers bzw. seines Zylinderabschnittes abwechselnd beeinflußt, so daß die induzierten Ausgangsspannungen der Meßspule in Abhängigkeit vom Drehwinkel des Zylinderabschnittes des Meßkörpers verändert wird.

Gemäß Anspruch 2 erstreckt sich der Zylinderabschnitt des Meßkörpers vorzugsweise über die gesamte Breite der benachbarten Spulenabschnitte, wodurch eine Verstärkung der Beeinflussung der Induktivität der Spulenabschnitte der beiden Spulenringe bewirkt wird. Somit wird durch diese erfindungsgemäße Ausgestaltung das Meßsignal verstärkt. Da nur ein Zylinderabschnitt benötigt wird, sind auch die Herstellkosten für den Meßkörper äußerst gering. Andererseits kann auch die Baulänge des Meßkörpers und somit der gesamten Winkelmeßvorrichtung gering gehalten werden.

Gemäß Anspruch 3 kann zur Drehrichtungserkennung eine zweite Meßspule vorgesehen sein, die in Umfangsrichtung mit ihren Spulenabschnitten um 90° versetzt zur ersten Meßspule angeordnet ist. Der Meßkörper kann dabei ebenfalls einen halbzylindrischen Zylinderabschnitt aufweisen, der sich über die Länge eines Spulenrings oder auch über die gesamte Länge beider hintereinander liegender Spulenringe erstreckt. Zum Erreichen einer möglichst kleinen Baugröße können die beiden Meßspulen zumindest bereichsweise ineinander gewickelt sein.

Gemäß Anspruch 4 wird die induktive Kopplung dadurch erheblich verbessert, daß auch die Wicklungen der Sendespule mit den Wicklungen der beiden Meßspulen bereichsweise ineinander gewickelt sind, so daß eine optimale magnetische Kopplung zwischen den einzelnen Spulenabschnitten und der Sendespule erreicht wird.

Durch die Ausgestaltungen der Ansprüche 5 bis 7, die einen speziell für die Aufnahme der Meßspulen und der Sendespule ausgestalteten Spulenkörper betreffen, wird eine Spuleneinheit zur Verfügung gestellt, die äußerst variabel für die unterschiedlichsten Einsatzzwecke einsetzbar ist und eine hohe Widerstandsfähigkeit gegen äußere Beschädigungen aufweist.

Für einen weiteren variablen Einsatz können die einzelnen Spulen oder auch die ineinander gewickelten Spulen gemäß Anspruch 8 auch als sog. Luftspulen ausgebildet sein.

Es versteht sich, daß die Meßspulen und die Sendespule in ihrem Durchmesser auch unterschiedlich ausgebildet sein können, so daß sie ineinander schiebbar sind und auch somit eine äußerst gute elektromagnetische Kopplung zwischen den einzelnen Spulenabschnitten der Meßspule und den Spulenringen der Sendespule erreicht wird.

Anhand der Zeichnung wird im folgenden die Erfindung näher erläutert. Es zeigt:
- Fig. 1: eine Winkelmeßvorrichtung mit zwei Meßspulen, einer Sendespule und einem Meßkörper in perspektivischer Explosionsdarstellung;
- Fig. 2: die Meßspulen, die Sendespule und den Meßkörper in funktionsrichtiger Lage in perspektivisch vergrößerter Darstellung;
- Fig. 3: einen perspektivischen Teilschnitt einer als Luftspule ausgebildeten Meßspule mit Meßkörper;
- Fig. 4: einen Spulenkörper zum Ineinanderwickeln von zwei Meßspulen und einer Sendespule;
- Fig. 5: den Spulenkörper aus Fig. 4 mit fertig gewickelten Meßspulen und Sendespule in perspektivischer Darstellung;
- Fig. 6: ein Blockschaltbild einer Differentialtrafoschaltung mit Sendespule und zwei Meßspulen;
- Fig. 7: einen Signalverlauf einer Trägerfrequenzspannung und zweier Meßspannungen zweier Meßspulen bei einer Differentialtransformatorschaltung in Abhängigkeit vom Drehwinkel des Meßkörpers;

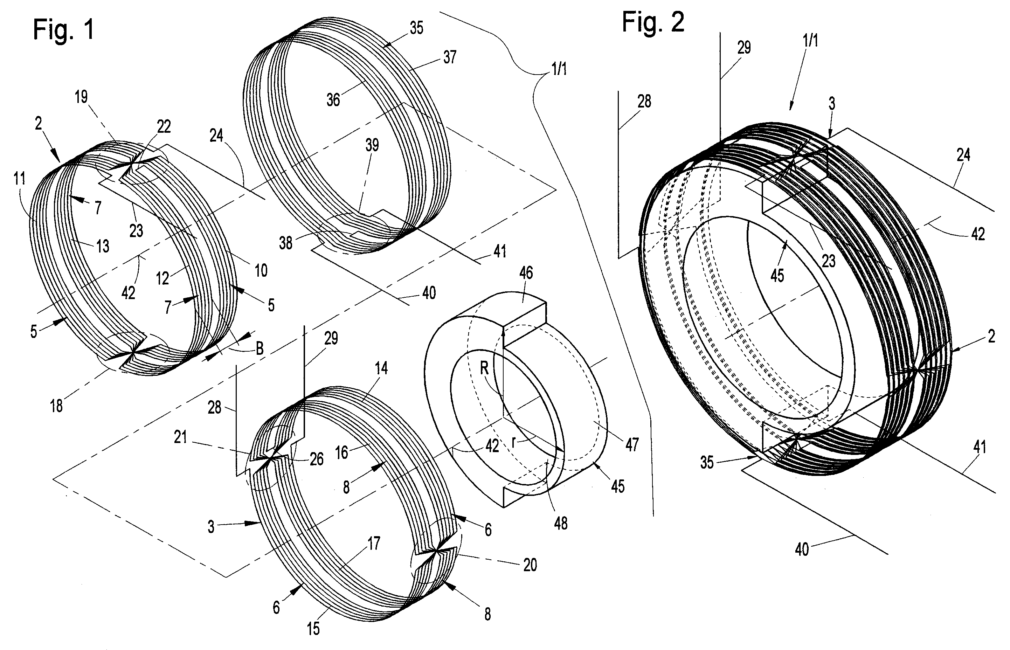

Fig. 1 zeigt die wesentlichen Bestandteile einer erfindungsgemäßen induktiven Winkelmeßvorrichtung 1 in perspektivischer Explosionsdarstellung. Die Winkelmeßvorrichtung 1 besteht aus zwei Meßspulen 2 und 3, einer Sendespule 35 sowie aus einem Meßkörper 45. Die beiden Meßspulen 2 und 3 sind identisch ausgebildet und weisen jeweils einen ersten Spulenring 5 bzw. 6 sowie einen zweiten Spulenring 7 bzw. 8 auf. Die Spulenringe 5, 6, 7 und 8 sind jeweils in zwei sich bezüglich einer gemeinsamen Spulenachse 42 diametral gegenüberliegende Spulenabschnitte unterteilt. So weist der erste Spulenring 5 der Meßspule 2 einen ersten Spulenabschnitt 10 und einen zweiten Spulenabschnitt 11 auf, welche sich über einen Zentriwinkel in Umfangsrichtung über annähernd 180° erstrecken. Der zweite Spulenring 7 der Meßspule 2 weist ebenfalls einen ersten Spulenabschnitt 12 sowie einen zweiten Spulenabschnitt 13 auf, welche sich ebenfalls diametral gegenüberliegen und welche sich in Umfangsrichtung jeweils über einen Zentriwinkel von annähernd 180° erstrecken.

In gleicher Weise ist der erste Spulenring 6 der Meßspule 3 ebenfalls in einen ersten Spulenabschnitt 14 und in einen zweiten Spulenabschnitt 15 unterteilt. Der zweite Spulenring 8 der Meßspule 3 weist ebenfalls einen ersten Spulenabschnitt 16 und einen zweiten Spulenabschnitt 17 auf, wobei sich die Spulenabschnitte 14 und 15 des Spulenrings 6 bzw. die Spulenabschnitte 16 und 17 des Spulenrings 8 jeweils ebenfalls diametral gegenüberliegen und sich jeweils über einen Zentriwinkel in Umfangsrichtung von annähernd 180° erstrecken.

Die Wicklungen des jeweiligen ersten Spulenrings 5 bzw. 6 und des jeweiligen zweiten Spulenrings 7 bzw. 8 überkreuzen sich diametral gegenüberliegend in zwei Kreuzungsbereichen 18 und 19 bzw. 20 und 21 derart, daß der jeweilige erste Spulenabschnitt 10 bzw. 14 des jeweiligen ersten Spulenrings 5 bzw. 6 in Achsrichtung der Spulenachse 9 hinter dem jeweiligen ersten Spulenabschnitt 12 bzw. 16 des jeweiligen zweiten Spulenrings 7 bzw. 8 liegt. Dementsprechend liegen die jeweiligen zweiten Spulenabschnitte 11 bzw. 15 des jeweiligen ersten Spulenrings 5 bzw. 6 axial vor dem jeweiligen zweiten Spulenabschnitt 13 bzw. 17 des zweiten Spulenrings 7 bzw. 8.

Die beiden Spulenringe 5 und 7 der ersten Meßspule 2 sind im Kreuzungsbereich 19 der Wicklungen ihrer beiden Spulenringe 5 und 7 miteinander verbunden, wie dies durch den elektrischen Verbindungssteg 22 in Fig. 1 angedeutet ist.

In diesem Kreuzungsbereich 19 sind auch die Anschlußleitungen 23 und 24 vorgesehen, an welchen das Meßsignal der Meßspule 2 abnehmbar ist. Es versteht sich , daß die Anschlußleitungen 23 und 24 nicht zwingend im Umfangsbereich des Kreuzungsbereiches 19 angeordnet sein müssen. Es ist jedoch von Vorteil, wenn beide Anschlußleitungen 23 und 24 im gleichen Umfangsbereich der Meßspule 2 angeordnet sind, so daß beide Spulenringe 5 und 7 dieselbe Spulengeometrie aufweisen und im unbeeinflußten Zustand bei gleichem magnetischen Wechselfeld auch dieselbe Ausgangsspannung in ihnen induziert wird. Sind beide Spulenringe identisch ausgebildet, so ist die an den Anschlußleitungen 23 und 24 abnehmbare Meßspannung im unbeeinflußten Zustand der Meßspule 2 gleich Null, da die in den Spulenabschnitten 10, 11 und 12, 13 der gegensinnig gewickelten Spulenringe 5 und 7 die in diese induzierten Spannungen entgegengesetzt gleich groß sind.

In gleicher Weise wie bei der Meßspule 2 ist auch bei der Meßspule 3 in deren Kreuzungsbereich 21 ein Verbindungssteg 26 vorgesehen, über welchen die beiden Spulenringe 6 und 8 elektrisch miteinander gekoppelt sind. Im Kreuzungsbereich 21 mit dem Verbindungssteg 26 sind auch bei der Meßspule 3 zwei Anschlußleitungen 28 und 29 vorgesehen, über welche ein entsprechendes Meßsignal an der Meßspule 3 abnehmbar ist. Auch diese Anschlußleitungen 28 und 29 müssen nicht zwingend in diesem Kreuzungsbereich 21, wie bereits zur Meßspule 2 zum Kreuzungsbereich 19 beschrieben angeordnet sein.

Wie aus Fig. 1 ersichtlich ist, sind die beiden Meßspulen 2 und 3 koaxial zueinander angeordnet und um einen Winkel von 90° in Umfangsrichtung zueinander versetzt. Dies bedeutet, daß die Kreuzungsbereiche 18 und 19 der Meßspule 2 in etwa in einer Vertikalebene und um 90° versetzt zu den Kreuzungsbereichen 20 und 21 der Meßspule 3 angeordnet sind, welche in etwa in einer Horizontalebene angeordnet sind.

Durch wechselseitige Beeinflussung der Induktivitäten der Meßspulen 2 und 3 bzw. der Spulenabschnitte 10, 11, 12, 13 und 14, 15, 16, 17 der Spulenringe 5, 7 und 6, 8 der beiden Meßspulen 2 und 3 durch einen, wie in Fig. 1 beispielhaft dargestellten Meßkörper 45 ändern sich allerdings die induzierten Spannungen in den Spulenabschnitten 10, 11, 12, 13 und 14, 15, 16, 17 der Spulenringe 5 und 7 bzw. 6 und 8, so daß an den Anschlußleitungen 23, 24 und 28, 29 entsprechende Spannungssignale in positiver oder negativer Richtung abnehmbar sind. Zu dieser Induktivitätsbeeinflussung ist der Meßkörper 45 aus einem metallischen Werkstoff gebildet, welcher eine positive oder negative elektromagnetische Kopplung und damit auch eine dementsprechende Beeinflussung der Induktivitäten bewirkt.

Um eine drehwinkelabhängige Beeinflussung der Induktivitäten der Spulenringe zum Erzeugen eines Meßsignals zu ermöglichen, weist dazu der Meßkörper 45 einen äußeren etwa halbzylindrisch ausgebildeten Zylinderabschnitt 46 auf, welcher sich über einen Umfangswinkel von etwa 180° erstreckt. Diesem Zylinderabschnitt 46 liegt ein sich ebenfalls über 180° in Umfangsrichtung erstreckender Zylinderwandabschnitt 47 diametral gegenüber, welcher in seinem Außendurchmesser **r** kleiner ausgebildet ist, als der Außendurchmesser **R** des Zylinderabschnittes 46.

Um eine induktive Beeinflussung beider Meßspulen 2, 3 durch den Meßkörper 45 zu erreichen, werden die beiden Meßspulen 2, 3 mit ihren Spulenabschnitten 10, 11, 12, 13 und 14, 15, 16, 17 so angeordnet, daß deren vordere Spulenabschnitte 11, 12 und 15, 16 bzw. deren hintere Spulenabschnitte 10, 13 und 14, 17 in axialer Richtung deckungsgleich sind. Dabei können die Meßspulen 2, 3 unterschiedliche Durchmesser aufweisen, so daß sie wechselseitig ineinander geschoben werden können, oder sie können auch bei deren Herstellung ineinander gewickelt werden.

Wird der Meßkörper 45 in die beiden Meßspulen 2 und 3 in axialer Richtung hinein geschoben, so weist der Zylinderabschnitt 46 einen wesentlich geringeren radialen Abstand zu den Meßspulen 2 und 3 bzw. zu deren Spulenringen 5 und 7 bzw. 6 und 8 auf, so daß die Induktivitäten der Spulenringe 5 und 7 bzw. 6 und 8 insbesondere aber deren Spulenabschnitte 10, 11 und 12, 13 bzw. 14, 15 und 16, 17 je nach Winkellage des Zylinderabschnittes 46 relativ zu diesen Spulenabschnitten 10 bis 17 in diesen unterschiedliche Meßspannungen induziert. Der Zylinderabschnitt 46 kann sich dabei in Achsrichtung zumindest über eine axiale Länge in Richtung der Spulenachse 42 erstrecken, welche der Breite **B** eines Spulenrings 5, 6, 7 oder 8 entspricht. Beim vorliegenden Ausführungsbeispiel erstreckt sich der Zylinderabschnitt 46 allerdings über die gesamte axiale Länge der Meßspulen 2, 3 und der Sendespule 35.

Die Wirkungsweise dieser induktiven Beeinflussung wird nachfolgend am Beispiel der Meßspule 2 näher erläutert. In der in Fig. 1 dargestellten Drehlage des Meßkörpers 45 mit seinem Zylinderabschnitt 46 wird, wie dies insbesondere aus Fig. 2 hervorgeht, durch diesen Zylinderabschnitt 46 des Meßkörpers 45 die Induktivität des vorderen Spulenabschnitts 11 des ersten Spulenrings 5 beeinflußt, während die Induktivität des vorderen Spulenabschnitts 12 des zweiten Spulenrings 7 durch den großen radialen Abstand zum Zylinderwandabschnitt 47 nur wenig bzw. gar nicht induktiv beeinflußt wird. Dadurch wird je nach Wahl des Materials des Zylinderabschnittes 46 (oder auch des gesamten Meßkörpers 45) die in den Spulenabschnitt 11 induzierte Spannung verringert oder vergrößert, während die in den Spulenabschnitt 12 induzierte Spannung unverändert bleibt. Eine Vergrößerung dieser Spannung des Spulenabschnitts 11 wird beispielsweise durch eine induktive Kopplung durch den Zylinderabschnitt 46 erreicht, wenn der Zylinderabschnitt 46 beispielsweise aus einem ferromagnetischen Material gebildet ist. Eine negative Kopplung bzw. Bedämpfung wird bei der Verwendung eines nicht magnetischen metallischen Materials für den Zylinderabschnitt 46 erreicht, so daß für diesen Fall die in den Spulenabschnitt 11 bei der dargestellten Drehlage des Zylinderabschnittes 46 die induzierte Spannung kleiner ist, als in dem nicht beeinflußten Spulenabschnitt 12. Somit ist an den Anschlußleitungen 23 und 24 der Meßspule 2 aufgrund der unterschiedlich induzierten Spannungen in den Spulenabschnitten 11 und 12 eine Differenzspannung meßbar, welche als Meßsignal weiter auswertbar ist. Durch die entgegengesetzte Wicklung der beiden Spulenringe 36 und 37 wird in die Spulenabschnitte 10 und 13 der Spulenringe 5 und 7 jeweils eine den in die Spulenabschnitte 11 und 12 der Spulenringe 5 und 7 entgegengesetzte Meßspannung induziert. Für einen sich über die gesamten axiale Länge der Meßspulen 2, 3 und der Sendespule 35 erstreckenden Zylinderabschnitt 46 des Meßkörpers 45 wird somit im axial hinten liegenden Spulenabschnitt 13 des Spulenrings 7 durch den Zylinderabschnitt 46 ebenfalls eine Spannungsänderung bewirkt wie bei dem axial vorne liegenden Spulenabschnitt 11 des Spulenrings 5. Durch diese Spannungsänderung erhält man eine größere Meßspannung an den Anschlußleitungen 23 und 24 der Meßspule 2, so daß insgesamt eine Verstärkung des Meßsignals bewirkt wird.

In einer Mittelstellung des Meßkörpers 45, in welcher alle vier Spulenabschnitte 10, 11 und 12, 13 der beiden Spulenringe 5 und 7 gleichmäßig durch den Zylinderabschnitt 46 beeinflußt werden, ist die Meßspannung gleich Null, da die in die Spulenabschnitte 10, 11 und 12, 13 induzierten Spannungen betragsmäßig gleich groß sind und sich somit gegenseitig egalisieren.

Wird auch die Meßspule 3 zur Drehwinkelmessung mit herangezogen und beispielsweise mir ihren Spulenabschnitten 14, 15, 16 und 17 axial deckungsgleich zu den Spulenabschnitten 10, 11, 12 und 13 der Meßspule 2 bzw. deren Spulenringe 5 und 7 angeordnet, so kann in dieser ein identisches Meßsignal induziert und abgenommen werden. Dieses Meßsignal ist allerdings um 90^{o} zum Meßsignal der Meßspule 2 phasenverschoben, da die Meßspule 3 mit ihren Kreuzungsbereichen 20 und 21 in Umfangsrichtung um 90° gedreht zu den Kreuzungsbereichen 18 und 19 der Meßspule 2 angeordnet ist. Der Meßkörper 45 wirkt mit seinem Zylinderabschnitt 45 somit in gleicher Weise auf die Meßspule 3. Die beiden Meßspulen 2 und 3 sind dabei vorteilhafterweise identisch ausgebildet, so daß auch die abnehmbaren Meßsignale in ihrer Amplitude identisch sind. Damit stehen zur Drehwinkelmessung der Drehwinkellage des Meßkörpers 45 zwei um 90° zueinander phasenverschobene Meßsignale zur Verfügung, so daß die Drehwinkellage und auch die Drehrichtung des Meßkörpers 45 sicher meßbar sind.

Zum Erzeugen des magnetischen Wechselfeldes ist, wie bereits erwähnt, bei der Winkelmeßvorrichtung 1/1 die Sendespule 35 vorgesehen. Beim vorliegenden Ausführungsbeispiel ist die Sendespule 35 in zwei Spulenringe 36 und 37 unterteilt, welche gegensinnig gewickelt sind. Die Spulenringe 36 und 37 der Sendespule 35 sind aus einem einzigen Spulendraht gewickelt, welcher in der Zeichnung im unteren tiefsten Bereich 39 einen Wendesteg 38 aufweist, welcher die beiden Spulenringe 36 und 37 elektrisch miteinander verbindet. Ebenfalls in diesem tiefsten Bereich 39 sind zwei Anschlußleitungen 40 und 41 der Sendespule 35 vorgesehen, in welche die erforderliche Wechselspannung zur Erzeugung des magnetischen Wechselfeldes aufbringbar ist.

Wie aus Fig. 1 ersichtlich ist, liegen die beiden Spulenringe 36 und 37 in axialer Richtung der Spulenachse 42 in einem Abstand hintereinander. Damit wird bewirkt, daß durch die Spulenringe 36 und 37 aufgrund ihrer gegensinnigen Wicklungsrichtung auch gegensinnige magnetische Wechselfelder mit einer Phasenverschiebung von 180° erzeugt werden. Diese Sendespule 35 wird im Betrieb derart entweder in die beiden Meßspulen 2 und 3 eingewickelt oder umgibt diese Meßspulen 2 und 3 derart, daß sie mit ihrem in der Zeichnung vorderen Spulenring 36 im axialen Bereich der Spulenabschnitte 11 und 12 des Spulenrings 5 bzw. 7 und im Bereich der Spulenabschnitte 15 und 16 der Spulenringe 6 und 8 angeordnet ist. Der Abstand der Spulenringe 36 und 37 der Sendespule 35 in axialer Richtung ist dabei auf den Abstand der axial hintereinander liegenden Spulenabschnitte 12 und 10 bzw. 11 und 13 bzw. 16 und 14 bzw. 15 und 17 der Spulenringe 5 und 7 bzw. 6 und 8 abgestimmt, so daß der in der Zeichnung axial hinten liegende Spulenring 37 der Sendespule 35 etwa im axialen Bereich der hinteren Spulenabschnitte 14 und 17 der Meßspule 3 bzw. 10 und 13 der Meßspule 2 liegt. Dadurch werden in die entsprechenden Spulenabschnitte, welche wechselseitig in den sich entgegenwirkenden Wechselfeldern der Spulenringe 36 und 37 liegen, auch entgegengesetzte Meßspannungen induziert, welche sich bei optimaler Induktion und gleichmäßiger Ausbildung der beiden Meßspulen 2 und 3 sowie der beiden Spulenringe 36 und 37 der Sendespule 35 ohne äußere Beeinflussung gegenseitig aufheben, so daß an den Anschlußleitungen 23 und 24 der Meßspule 2 bzw. 28 und 29 der Meßspule 3 keine Meßspannung auftritt.

Zum Induzieren unterschiedlicher Meßspannungen ist bei der Winkelmeßvorrichtung 1/1, wie bereits erwähnt, der Meßkörper 45 vorgesehen.
Fig. 2 zeigt den zusammengebauten Zustand der Winkelmeßvorrichtung 1/1 in prinzipieller Anordnung. Durch das Ineinanderwickeln der drei Spulen, nämlich der Meßspule 2, der Meßspule 3 sowie der Sendespule 35 und durch die zentrale Integration des Meßkörpers 45 innerhalb dieser Spulenkombination wird eine integrale Winkelmeßvorrichtung 1/1 zur Verfügung gestellt, welche bei äußerst kleinen Abmessungen einen äußerst hohen Wirkungsgrad zum Erzeugen der benötigten Meßsignalen zur Winkel- und Drehrichtungserfassung aufweist.

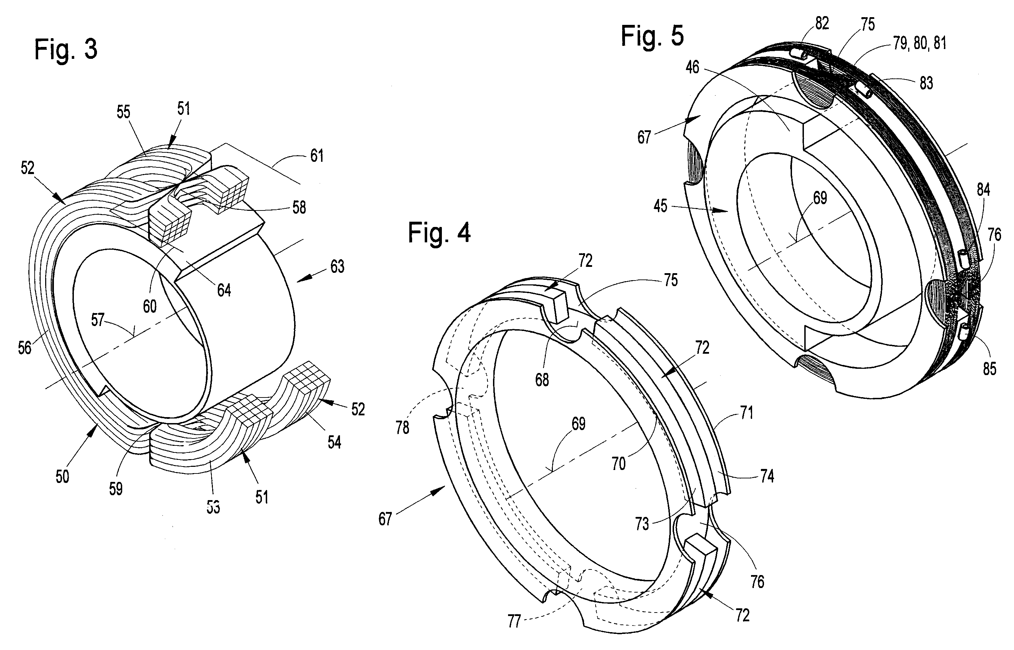

Fig. 3 zeigt eine Meßspule 50, deren prinzipieller Aufbau der Meßspule 2 aus den Fig. 1 und 2 entspricht. Die Meßspule 50 ist dabei als sog. "Luftspule" ausgebildet und erhält ihre Stabilität durch eine sog. "Backlacktechnik". Die Meßspule 50 weist ebenfalls einen ersten Spulenring 51 und einen zweiten Spulenring 52 auf, welche jeweils in einen ersten Spulenabschnitt 53 bzw. 54 und einen zweiten Spulenabschnitt 55 bzw. 56 unterteilt sind. Desweiteren ist auch ein Meßkörper 63 mit einem sich etwa über 180° in Umfangsrichtung erstreckenden Zylinderabschnitt 64 dargestellt, welcher koaxial zur Spulenachse 57 verlaufend zentral in der Meßspule 50 angeordnet ist. Der Zylinderabschnitt 64 bzw. der gesamte Meßkörper 63 kann aus einem Mitkopplungs- oder auch Gegenkopplungsmaterial gebildet sein, wobei als Mitkopplungsmaterial als ein die Induktivität verstärkendes Material ein ferromagnetisches Metall vorgesehen ist. Als Gegenkopplungsmaterial bzw. bedämpfendes Material kann dabei andererseits für den Meßkörper 63 ein nicht magnetischer metallischer Werkstoff vorgesehen sein. Es versteht sich, daß der Zylinderabschnitt 64 auch als separate Bauteile auf einem Zylinder aufgebracht sein können, wobei in diesem Fall der Zylinder aus einem neutralen Material bezüglich seiner Beeinflussung der Induktivitäten gebildet wird. Das Meßsignal wird bei der "Luftspule" 50 entsprechend zur Meßspule 2 aus Fig. 1 an den Anschlußleitungen 60 und 61 abgenommen. In Fig. 3 wurde auf die Darstellung einer zweiten Meßspule sowie der Sendespule aus Gründen der Übersichtlichkeit verzichtet. Die zweite Meßspule und die Sendespule könnten bei diesem Ausführungsbeispiel z.B. im Durchmesser größer ausgebildet sein als die dargestellte erste Meßspule und diese umschließen.

Fig. 4 zeigt einen speziellen, etwa ringförmig ausgebildeten Spulenkörper 67, auf welchen beispielsweise die Spulenanordnung gemäß der Fig. 1 und 2 in einfacher Weise wickelbar ist. Dazu weist der Spulenkörper 67 einen Wickelzylinder 68 auf, welcher in axialer Richtung seiner Zylinderachse 69 an seinen Enden durch jeweils eine radial erweiterte Stegwand 70 bzw. 71 begrenzt ist. Diese beiden Stegwände 70 und 71 begrenzen jeweils außenseitig den Wickelbereich in welchem auf dem Spulenkörper 67 die entsprechenden Wicklungen gemäß der prinzipiellen Darstellung aus Fig. 1 aufwickelbar sind.

Etwa axial mittig ist zwischen diesen radialen Stegwänden 70 und 71 ein radialer Trennsteg 72 vorgesehen, durch welchen der Wickelzylinder 68 axial in einen vorderen und einen hinteren Wickelbereich 73 und 74 unterteilt ist. Der Trennsteg 72 ist dabei in Umfangsrichtung unterbrochen, so daß vier jeweils um 90° zueinander versetzt angeordnete Kreuzungsbereiche 75, 76, 77 und 78 gebildet werden. Durch diese Kreuzungsbereiche 75 bis 78 sind auf dem Spulenkörper 67 in einfacher Weise elektromagnetische Induktionsspulen mit Wickelgeometrien der zu wickelnden Spulen gemäß der drei Spulen aus Fig. 1 aufnehmbar.

Fig. 5 zeigt den Spulenkörper 67 mit fertig gewickelten Spulen 79, 80 und 81, wobei diese Spulen 79, 80 und 81 derart ineinander gewickelt sind, daß aus der Darstellung der Fig. 5 die Einzelspulen nicht mehr einzeln erkennbar sind. Im Bereich seines Trennsteges 72, bzw. im Bereich der Enden der einzelnen Abschnitte des Trennsteges 72, sind am Trennsteg 72 entsprechende Anschlußösen 82, 83, 84 und 85 vorgesehen, welche Verbindungselemente zu den entsprechend notwendigen Anschlußleitungen bzw. Meßleitungen, wie diese in Fig. 1 angedeutet sind, darstellen.

In Fig. 5 sind dabei aufgrund der dreidimensionalen Darstellung lediglich die beiden Anschlußösen 82 und 83 für die Anschlußleitungen 23 und 24 und die Anschlußösen 84 und 85 beispielsweise für die Anschlußleitungen 28 und 29 sichtbar, wobei man sich dabei die der Meßspule 3 entsprechende Meßspule in Fig. 5 um eine vertikale Achse um 180° gedreht vorstellen muß, so daß die Anschlußösen 84 und 85 in dem dargestellten vorderen Bereich des Spulenkörpers 67 angeordnet sind.

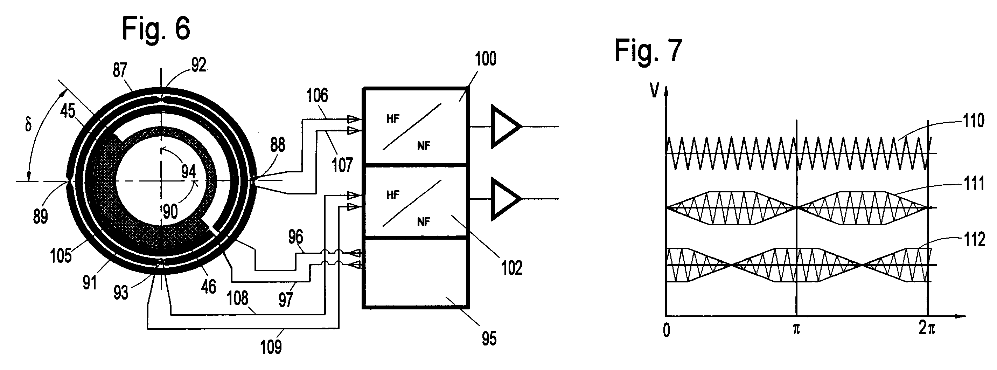

In Fig. 6 ist prinzipiell das Blockschaltbild eines Differenzialtrafosystems mit einer Sendespule 105 und zwei Meßspulen 87 und 91 dargestellt. In dieser Darstellung sind die einzelnen Spulenabschnitte der Meßspulen 87, 91 sowie der Sendespule 105 nicht erkennbar, entsprechen aber der Ausgestaltung des Ausführungsbeispiels der Winkelmeßvorrichtung 1/1 gemäß der Fig. 1 und 2. Die Sendespule 105 ist dabei zum Erzeugen des magnetischen Wechselfeldes vorgesehen. Die beiden Meßspulen 87 und 91 können in ihrem Durchmesser unterschiedlich ausgebildet sein, so daß sie nicht direkt ineinander gewickelt sind, sondern radial einen Abstand zueinander aufweisen. In der Darstellung der Fig. 6 sind dabei die beiden Meßspulen 87 und 91 in ihrem Durchmesser größer ausgebildet als die Sendespule 105, wobei innerhalb aller Spulen 87, 91 und 105 der Meßkörper 45 aus Fig. 1 angeordnet ist. Beim Ausführungsbeispiel der Fig. 6 liegen die beiden Kreuzungsbereiche 88 und 89 der ersten Meßspule 87 in einer Horizontalebene 90, wobei sich diese Kreuzungsbereiche 88 und 89 diametral gegenüberliegen. Die zweite Meßspule 91 weist dagegen ihre beiden Kreuzungsbereiche 92 und 93 in einer um 90° zur Horizontalebene 90 gedrehten Vertikalebene 94 auf, wobei sich die beiden Kreuzungsbereiche 92 und 93 ebenfalls diametral gegenüberliegen.

Desweiteren ist in Fig. 6 ein Trägerfrequenzgenerator 95 erkennbar, durch welchen die Sendespule 105 über die beiden Anschlußleitungen 96, 97 mit einer Trägerfrequenzspannung beaufschlagt wird, so daß ein magnetisches Wechselfeld durch die Sendespule 105 erzeugt wird. Dieses Wechselfeld durchsetzt die beiden Meßspulen 87 und 91, so daß an deren Enden durch die Verbindungsleitungen 106, 107 bzw. 108, 109 eine entsprechende Meßspannung abnehmbar ist, welche durch jeweils einen Demodulator 100 bzw. 102 zur weiteren Verarbeitung demoduliert werden. Die Meßspannungen werden dabei direkt von den Wicklungsenden in den Kreuzungsbereichen 88 bzw. 93 der beiden Meßspulen 87 und 91 abgenommen. In Fig. 6 ist der Meßkörper 45 in einer Winkelstellung dargestellt, in welcher die Endkanten des Zylinderabschnittes 46 unter einem Stellwinkel δ von 45° zur Horizontalen 90 angeordnet ist.

Die Verläufe der einzelnen Spannungen, sprich der Trägerfrequenzspannung 110 der Sendespule 105 sowie der beiden Meßsignale bzw. Meßspannungen 111 und 112 der beiden Spulen 87 und 91 sind in Fig. 7 dargestellt. Bei einem Drehwinkel von 0° ,wird beispielsweise in die erste Meßspule 87 keine Meßspannung induziert. Diese 0°-Stellung wäre beispielsweise erreicht, wenn sich der Meßkörper 45 aus Fig. 6 mit den Enden seines Zylinderabschnitte 46 in der Vertikalebene 94 befindet. In dieser 0°-Stellung wird in die zweite Meßspule 91 eine maximale Meßspannung 112 induziert. Bei einer Drehung des Meßkörpers 45 aus dieser Stellung um 90° entgegen des Uhrzeigersinns, wächst die Meßspannung 111 der ersten Meßspule 87 bis zu ihrem Maximum, während die Meßspannung 112 der zweiten Meßspule 91 auf Null absinkt. Bei einer weiteren Drehung um 90°, bis zur Winkelstellung π verringert sich die Meßspannung der ersten Meßspule 87 auf Null, während die Meßspannung 112 der zweiten Meßspule 91 auf ihren Maximalwert anwächst. Beim Nulldurchgang der zweiten Meßspannung tritt dabei eine Phasenverschiebung des Meßsignals um 90° auf, so daß die Meßspannung 112 vom Drehwinkel 90° bis zum Drehwinkel 180° bzw. π sozusagen ein negatives Vorzeichen bezüglich der Trägerfrequenzspannung 110 aufweist. Desgleichen tritt bei der Meßspannung 111 der ersten Meßspule 87 bei Durchgang des Meßkörpers 45 durch die 180°-Winkellage ebenfalls eine Phasenverschiebung um 90° auf, so daß bei einer weiteren Drehung des Meßkörpers 45 auf 270° auch das Meßsignal bis auf einen betragsmäßigen Maximalwert anwächst, aber ein negatives Vorzeichen in Bezug auf die Trägerfrequenzspannung 110 aufweist. Gleichzeitig verringert sich das zweite Meßsignal der zweiten Meßspule 91 wieder auf Null. Bei Durchgang des Meßkörpers 45 durch die 270°-Winkellage tritt bei diesem zweiten Meßsignal 112 eine weitere Phasenverschiebung um 90° auf, so daß bei weiterer Drehung des Meßkörpers 45 auf 360° bzw. in die Stellung **2**π die Meßspannung 112 wieder anwächst, aber nun ein positives Vorzeichen bezüglich der Trägerfrequenzspannung 110 aufweist. Die erste Meßspannung 111 der ersten Meßspule verringert sich wiederum bis auf Null. Aus diesem Signalverlauf der Meßspannungen 111 und 112 läßt sich durch Demodulation beider Meßsignale in einfacher Weise der Drehwinkel des Meßkörpers 45 und dessen Drehrichtung ermitteln. Aus den jeweils nach 180° und 360° auftretenden 90°-Phasenverschiebung des Meßsignals 111 der Meßspule 87 bzw. aus der 90°-Phasenverschiebung des Meßsignals bei jeweils 90° und 270° ist bei gleichzeitiger Auswertung beider Meßsignale 111 und 112 auch die Drehrichtung des Meßkörpers 45 in einfacher Weise bestimmbar. Die Phasenverschiebungen treten aufgrund des geometrischen Aufbaues beider Meßspulen 87 und 91 jeweils nach jeder halben Umdrehung um 180° des Meßkörpers 45 auf, wobei für die zweite Meßspule 91 entsprechend deren um 90° in Umfangsrichtung versetzte Anordnung zur ersten Meßspule 87 noch zu berücksichtigen ist und somit deren Phasenverschiebungen jeweils um 90° verzögert auftritt.

Die beiden Meßsignale 111 und 112 sind, bei identischer Spulengeometrie beider Meßspulen 87 und 91, in ihrem zeitlichen Verlauf identisch und um 90° in Drehrichtung des Meßkörpers 45 verschoben.

Mit der erfindungsgemäßen induktiven Winkelmeßvorrichtung wird ein berührungsloser Drehgeber zur Positionsmeldung eines Meßkörpers durch Erzeugung eines Analogsignals über einen Drehwinkel von 360° zur Verfügung gestellt.

Die Spulenanordnung ist einerseits auf einem Spulenkörper oder auch als Luftspule in Backlacktechnik möglich. Die einzelnen Spulen können dabei in einer Rotationswickeltechnik in einem Arbeitsgang hergestellt werden, so daß sich äußerst günstige Herstellkosten bei gleichzeitig optimalen induktiven Verhältnissen der einzelnen Spulen zueinander ergeben.

Durch diese gleichzeitige Wicklung aller benötigten Spulen wird eine kleine und schmale Bauform erreicht, wodurch ein weitläufiges Einsatzgebiet sichergestellt ist. Die erfindungsgemäße Winkelmeßvorrichtung ist bestens für eine Hohlwellenanordnung oder auch für eine Achsanwendung geeignet, wobei insbesondere bei einer Hohlwellenanordnung die Meßkörper beispielsweise in der Innenwandung der Hohlwelle anordenbar sind und das eigentliche Spulensystem innerhalb dieses rotierenden Meßkörpers angeordnet sein kann. Auch kann, wie dies auch aus den Zeichnungsfiguren deutlich wird, die komplette Spulennanordnung, insbesondere wenn sie als Einheit auf einen Spulenkörper gewickelt ist, an jeder beliebigen Stelle einer bereits vorhandenen Welle eingesetzt werden, da sie in axialer Richtung bei entsprechender Dimensionierung im Durchmesser auf die Welle an die vorgesehene Stelle aufgeschoben werden kann. Die erfindungsgemäße Winkelmeßeinrichtung ist somit nicht auf den Einsatz an einem Wellenende beschränkt, wie dies beispielsweise bei den eingangs beschriebenen Resolvern der Fall ist.

Durch entsprechende Wahl des Materials des Meßkörpers als Drehanker mit einem sich etwa über 180° erstreckenden Bogenteil oder Zylinderabschnitt kann eine Signalverstärkung in den einzelnen Spulenabschnitten oder auch eine Dämpfung des Signals in den einzelnen Spulenabschnitten erreicht werden, so daß auch bezüglich des Meßkörpers eine variable Ausgestaltung möglich ist.

Ein weiterer Vorteil ergibt sich daraus, daß dieser Meßkörper keine eigene Lagerung aufweisen muß, da er beispielsweise auf jeder Antriebswelle angeordnet werden kann.

Die Spulenanordnung kann auch ohne eigenes Gehäuse, beispielsweise wie in Fig. 3 dargestellt, ausgebildet sein, wodurch die Variabilität des Einsatzgebietes weiter erhöht wird.

Da die Spulenanordnung eisenlos ausgebildet ist, kann die Trägerfrequenz äußerst hoch gewählt werden, wodurch eine äußerst hohe Sensorgeschwindigkeit bei gleichzeitig hoher Empfindlichkeit gegenüber der Drehwinkelveränderung des Meßkörpers erreicht wird. Die Signalauswertung kann mit handelsüblichen preiswerten integrierten Schaltungen durchgeführt werden, wodurch wiederum nur ein geringer Kostenaufwand bei der Verwendung der erfindungsgemäßen Winkelmeßvorrichtung erreicht wird. Da die magnetische Kupplung zwischen den einzelnen Meßspulen und der Sendespule aufgrund der integrierten Wicklungen äußerst groß ist, wird nur eine äußerst geringe Energieaufnahme des gesamten Meßsystems erreicht.

## Patentansprüche

1. Induktive Winkelmeßvorrichtung (1/1) mit wenigstens einer elektromagnetischen Meßspule (2, 3, 50, 87, 91), in welche durch wenigstens ein magnetisches Wechselfeld eine Meßspannung induziert wird, und mit einem drehend antreibbaren, die Induktivität und die Meßspannung der Meßspule (2, 3, 50, 87, 91) in Abhängigkeit seiner Winkelstellung gegenüber der Meßspule (2, 3, 50, 87, 91) beeinflussenden Meßkörper (45, 63) mit wenigstens einem sich über einen Zentriwinkel von etwa 180° erstreckenden Zylinderabschnitt (46, 64), wobei die Meßspule (2, 3, 50, 87, 91) aus einem ersten und einem zweiten Spulenring (5, 7, 51 und 6, 8 52) gebildet ist, welche koaxial zueinander angeordneten sind und jeweils in einen ersten und zweiten Spulenabschnitt (10, 12, 14, 16, 53, 54 und 11, 13, 15, 17, 55, 56) unterteilt sind, die sich jeweils diametral gegenüberliegen, und wobei sich die Wicklungen der beiden Spulenringe (5 und 7; 6 und 8; 51 und 52) derart überkreuzen, daß der erste Spulenabschnitt (10, 14, 53) des ersten Spulenringes (5, 6, 51) in einer Achsrichtung der Spulenachse (42, 57) axial versetzt vor dem ersten Spulenabschnitt (12, 14, 16, 54) des zweiten Spulenringes (7, 8, 52) und der zweite Spulenabschnitt (11, 15, 55) des ersten Spulenringes (5, 6, 51) in der gleichen Achsrichtung axial versetzt hinter dem zweiten Spulenabschnitt (13, 17, 56) des zweiten Spulenringes (7, 8, 52) angeordnet ist,
**dadurch gekennzeichnet**,
daß die Spulenringe (5 und 7 bzw. 6 und 8 bzw. 51 und 52) der Meßspule (2, 3, 50, 87, 91) gegensinnnig gewickelt sind, und
daß eine koaxial zur Meßspule (2, 3, 50, 87, 91) angeordnete Sendespule (35, 105) vorgesehen ist, die aus zwei entgegengesetzt gewickelten Spulenringen (36, 37) besteht, welche derart axial hintereinander liegend angeordnet sind, daß der erste Spulenring (36) axial im Bereich der vorderen Spulenabschnitte (11, 12, 15, 16, 52, 53) und der zweite Spulenring (37) axial im Bereich der hinteren Spulenabschnitte (10, 13, 14, 17, 54, 55) angeordnet ist.

2. Vorrichtung nach Anspruch 1, dadurch gekennzeichnet, daß sich der Zylinderabschnitt (46, 64) des Meßkörpers (45, 63) in Richtung der Drehachse (42, 57) des Meßkörpers (45, 63) etwa über die gesamte Breite der benachbarten Spulenabschnitte (10, 12, 14, 16, 55, 56 und 11, 13, 15, 17, 53, 54) der Meßspule (2, 3, 50, 87, 91) erstreckt.

3. Vorrichtung nach Anspruch 1 oder 2, dadurch gekennzeichnet, daß zwei Meßspulen (2, 3) vorgesehen sind, dessen Spulenringe (5, 7 bzw. 6, 8) in Umfangsrichtung mit ihren Spulenabschnitten (10, 11, 12, 13 bzw. 14, 15, 16, 17) um 90° zueinander versetzt angeordnet sind.

4. Vorrichtung nach einem der Ansprüche 1 bis 3, dadurch gekennzeichnet, daß die Wicklungen der Sendespule (35) mit den Wicklungen der Meßspule (2, 3) bzw. der beiden Meßspulen (2, 3) zumindest bereichsweise ineinander gewickelt sind.

5. Vorrichtung nach einem der Ansprüche 1 bis 4, dadurch gekennzeichnet, daß die Sendespule (35) und die Meßspule (2, 3) bzw. die Meßspulen (2, 3) auf einen gemeinsamen, etwa ringförmigen Spulenkörper (67) gewickelt sind.

6. Vorrichtung nach Anspruch 5, dadurch gekennzeichnet, daß der Spulenkörper (67) aus einem Wickelzylinder (68) besteht, der in axialer Richtung seiner Zylinderachse (69) an seinen Enden jeweils eine radial erweiterte Stegwand (70, 71) aufweist.

7. Vorrichtung nach Anspruch 6, dadurch gekennzeichnet, daß etwa mittig zwischen den Stegwänden (70, 71) ein radialer Trennsteg (72) vorgesehen ist, der im Umfangsbereich zwischen zwei benachbarten Spulenabschnitten (10 und 13; 11 und 12; 14 und 17; 15 und 16) der Spulenringe (5, 6, 7, 8) jeweils durchbrochen ist.

8. Vorrichtung nach einem der Ansprüche 1 bis 4, dadurch gekennzeichnet, daß die Meßspulen (50) und die Sendespule als einzelne oder ineinander gewickelte, selbsttragende sog. Luftspulen ohne festen Spulenkörper ausgebildet sind.
